# EUROPEAN PATENT APPLICATION

(11) **EP 4 406 443 A1**
(43) Date of publication of application: **31.07.2024**
(21) Application number: 23217774.1
(22) Date of filing: 18.12.2023
(51) Int. Cl.: A42B 3/04

(54) **BATTERY SYSTEM FOR HELMET MOUNT ASSEMBLY**

(30) Priority: 19.12.2022 US 202263433661 P
(71) Applicant: Wilcox Industries Corp., Newington, NH 03801 (US)
(72) Inventor: Teetzel, James, Portsmouth (US); Turner, Elliott, Newmarket (US)
(74) Representative: FRKelly

(57) **Abstract**

Battery pack system for helmet mount assembly comprises a center base module for electrical and physical attachment to a helmet mount. First and second battery packs configured for removable attachment to the center base module each hâve a pair of protruding attachment lugs. Each attachment lug has a first magnetic fastener element and a first electrical connecter element. The center base module has a first and second side surfaces configured for detachably securing the first and second battery packs, respectively. Each of the first and second side surfaces comprise a pair of lug réceptacles for receiving a respective one of the pairs of protruding attachment lugs. Each lug réceptacle has a second magnetic fastener element for physically coupling to a respective one of the first magnetic fastener éléments. Each lug réceptacle has a second electrical connecter element for electrically coupling to a respective one of the first electrical connecter éléments.

## Description

### CROSS REFERENCE TO RELATED APPLICATION

This application claims the priority benefit of U.S. provisional application no. 63/433,661 filed December 19, 2022. The aforementioned application is incorporated herein by reference in its entirety.

### BACKGROUND

The present disclosure relates to batteries and, in particular, to a battery attachment system for a powered helmet mount assembly.

### SUMMARY

In one aspect, a battery pack system for a helmet mount assembly comprises a center base module configured for electrical and physical attachment to a helmet mount assembly. First and second battery packs are configured for removable attachment to the center base module. Each of the first and second battery packs have a pair of protruding attachment lugs, wherein each of the attachment lugs has first magnetic fastener element and a first electrical connector element. The center base module has a first side surface configured for detachably securing the first battery pack. The center base module has a second side surface opposite the first side surface configured for detachably securing the second battery pack. Each of the first and second side surfaces comprise a pair of lug receptacles for receiving a respective one of the pairs of protruding attachment lugs. Each lug receptacle has a second magnetic fastener element for physically coupling to a respective one of the first magnetic fastener elements. Each lug receptacle has a second electrical connector element for electrically coupling to a respective one of the first electrical connector elements.

In embodiments, the center base module includes a selector switch that allows switching between the left and right battery packs without interruption to the power being supplied to the helmet mount assembly, which allows rapidly switching of the power supply when one of the battery packs is depleted and avoids the need to shut down, reboot, or otherwise power cycle an attached accessory device receiving power over the helmet mount assembly.

The magnetic fastener elements also allow a depleted battery pack to be pulled away from the center base module by manually pulling the battery pack with a force greater than the magnetic force of attraction between the magnetic fastener elements, which allows the user to easily change the batteries with the battery pack in front of the body and in plain view of the user, which task would otherwise be difficult to do blindly reaching behind the back of the helmet.

In a further aspect, a battery pack system for a helmet mount assembly comprises a center base module configured for electrical and physical attachment to a helmet mount assembly. First and second battery packs are configured for removable attachment to the center base module. A first adapter is hingedly attached to a first side of the center base module and has a first interface surface configured for removable attachment to the first battery pack. A second adapter is hingedly attached to a second side of the center base module and has a second interface surface configured for removable attachment to the second battery pack.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of an exemplary embodiment powered helmet mounting assembly attached to a helmet taken generally from the rear and left side, the powered helmet mounting assembly having a first embodiment battery pack center base module attached to a rear mount assembly of the powered helmet mounting assembly.
FIG. 2 is a top plan view of the helmet with the powered helmet mounting assembly and battery pack center base module appearing in FIG. 1,
FIG. 3 is an enlarged, top plan view of the battery pack center base module appearing in FIG. 1.
FIG. 4 is an enlarged, rear elevational view of the battery pack center base module appearing in FIG. 3.
FIG. 5 is an isometric view, taken generally from the rear and left side, of the exemplary embodiment powered helmet mounting assembly, helmet, and battery pack center base module appearing in FIG. 1, showing the battery pack center base module shown detached from the rear mount assembly of the powered helmet mounting assembly and further showing the manner in which the battery pack center base module can be replaced with a battery pack adapter to allow other battery packs, such as legacy battery packs, to be operably coupled to the helmet mounting system.
FIG. 6 is an isometric view of the powered helmet mounting assembly, helmet, and battery pack center base module appearing in FIG. 1, wherein left and right battery packs as removably attached to the battery pack center base module.
FIG. 7 is a top plan view of the powered helmet mounting assembly, helmet, battery pack center base module, and left and right battery packs appearing in FIG. 6.
FIG. 8 is a top plan view of the battery pack center base module with left and right battery packs appearing in FIG. 6.
FIG. 9 is a rear elevational view of the battery pack center base module with left and right battery packs appearing in FIG. 6.
FIG. 10 is a front elevational view of the battery pack center base module with left and right battery packs appearing in FIG. 6.
FIG. 11 is a fragmentary top view of the helmet with powered helmet mounting assembly, with the battery pack center base module attached to the rear mount assembly on the powered helmet mounting assembly.
FIG. 12 is an exploded top plan view of the battery pack center base module with left and right battery packs appearing in FIG. 8.
FIG. 13 is an enlarged isometric view of showing the manner of attachment of a battery pack to battery pack center base module.
FIG. 14 is an enlarged elevational view of the battery pack center base module showing the left side battery pack connector interface.
FIG. 15 is an enlarged end elevational view of a battery pack, taken from the connection interface end.
FIG. 16 an enlarged elevational view of the battery pack appearing in FIG. 15, taken generally from the side.
FIG. 17 an elevational view of a battery pack attached to the right side of the battery pack center base module, with a cutaway region showing the electrical and physical connections.
FIGS. 18 and 19 illustrate the battery pack center base module with an alternative battery pack and show the manner of attaching the battery pack to the battery pack center base module.
FIG. 20 illustrates the battery pack center base module with another alternative battery pack.
FIG. 21 illustrates the battery pack center base module with yet another alternative battery pack.
FIG. 22 is an isometric view of the battery pack center base module with left and right battery packs attached and showing the hinged rear panel in the open position for receiving a modular processing board cartridge.
FIG. 23 is an enlarged rear elevational view of the modular processing board cartridge appearing in FIG. 22.
FIG. 24 is an enlarged bottom plan view of the modular processing board cartridge appearing in FIG. 23.
FIG. 25 is an isometric view of the battery pack center base module with left and right battery packs attached and showing the hinged bottom panel in the open position for receiving programmable electronic storage media, such as non-volatile flash memory cards.
FIG. 26 is an isometric view of a further exemplary embodiment powered helmet mounting assembly attached to a helmet taken generally from the rear and left side, the powered helmet mounting assembly having the first embodiment battery pack center base module attached to a rear mount assembly of the powered helmet mounting assembly, the battery pack center base module further including left and right battery pack adapters for removably attaching battery packs in accordance with the Small Tactical Universal Battery (STUB) standard (e.g., Department of Defense MIL-PRF-32383).
FIG. 27 is a rear elevational view of the battery pack center base module and two attached STUB battery packs.
FIG. 28 is a partially exploded view of the battery pack center base module and STUB battery packs appearing in FIG. 27.
FIG. 29 is fragmentary isometric view of an exemplary STUB battery pack useable with the present development.
FIG. 30 is aside elevational view of the STUB battery pack adapter.
FIG. 31 is a first end elevational view of the STUB battery pack adapter illustrating the connection interface for attaching the STUB battery pack.
FIG. 32 is a second end elevational view of the STUB battery pack adapter illustrating the connection interface for attaching the STUB battery pack adapter to the battery pack center base module.
FIG. 33 illustrates a second embodiment battery pack center base module with a hinged interface configured for removably attaching STUB battery packs.
FIG. 34 is a top plan view of the battery pack center base module with left and right attached STUB battery packs, showing the range of pivoting hinge movement allowing the STUB battery packs to be pivoted in relation to the battery pack center base module toward and away from the helmet.
FIG. 35 is an isometric view of the battery pack center base module with left and right STUB battery packs, illustrating the manner of attaching and detaching the STUB battery packs.
FIG. 36 is an elevational view of the hinged connector on the battery pack center base module, illustrating the connection interface of the hinged connector.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

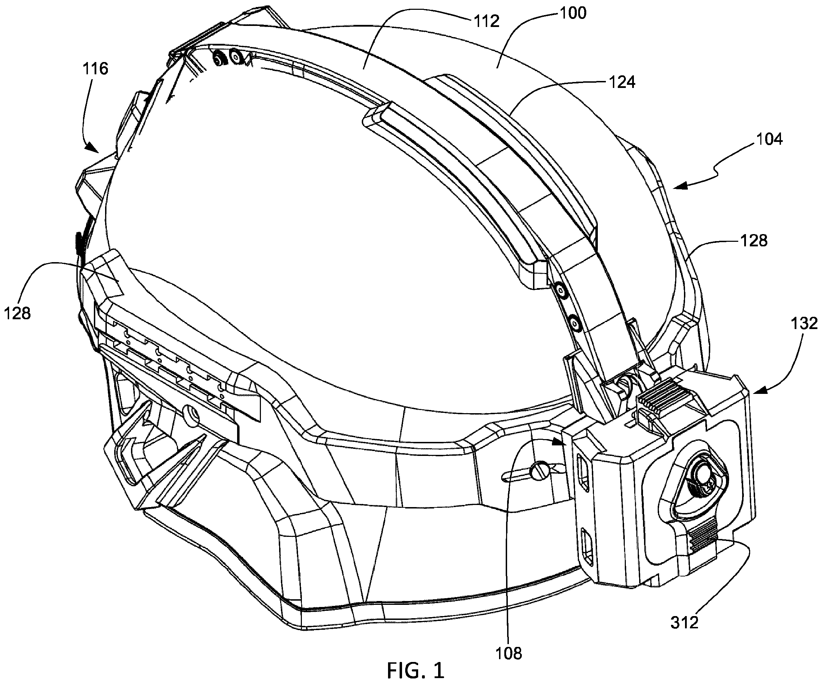

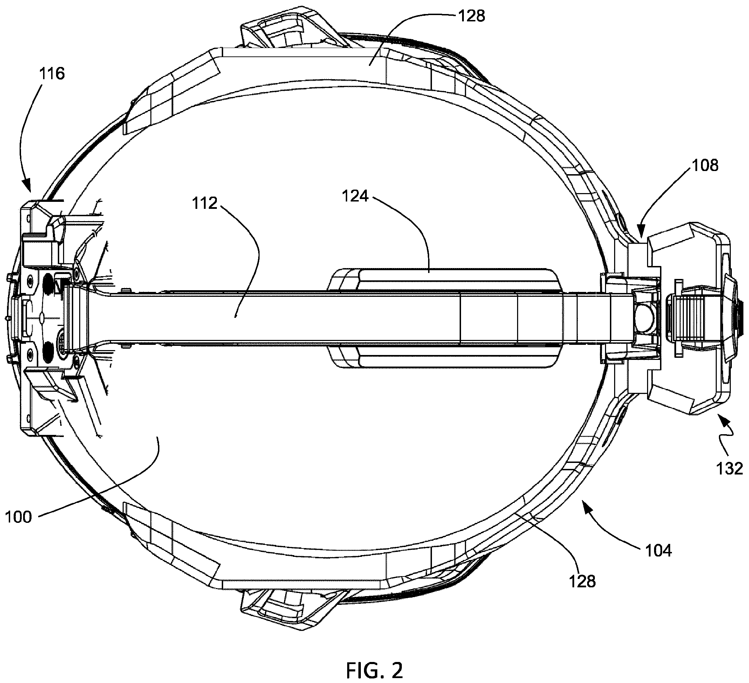

Referring now to FIGS. 1 and 2, there is shown a helmet **100** having a helmet mount assembly designated generally as reference numeral **104**. In embodiments, the helmet mount assembly may be as shown and described in commonly owned United States provisional patent application Serial No. 63/427,496 filed November 23, 2022, the entire contents of which are incorporated herein by reference in its entirety. In the illustrated embodiment, the helmet **100** is an Integrated Head Protection System (IHPS) helmet, it will be recognized that the present development can be adapted for use with all manner of protective helmets, including a Modular Integrated Communications Helmet (MICH), Advanced Combat Helmet (ACH), Enhanced Combat Helmet (ECH), and so forth.

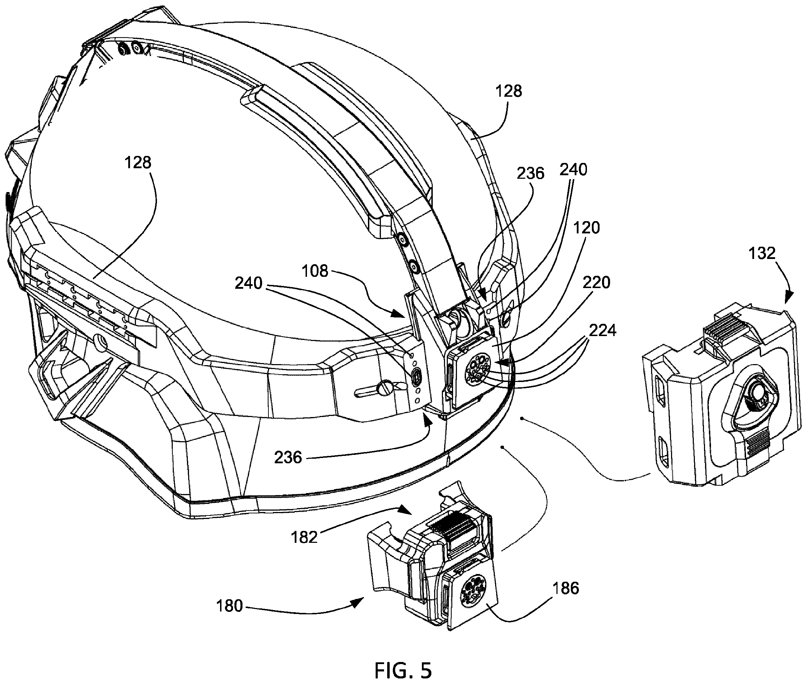

In the illustrated embodiment, the helmet mount assembly **104** includes a rear battery mounting bracket **108** disposed at the rear of the helmet **100**. A strap or cable cover **112** extends along a centerline of the helmet **100** from the rear battery mounting bracket **108** to a front shroud **116** disposed at the front of the helmet **100**. The battery mounting bracket **108** includes a hot shoe style interface **120** (see FIG. 5). The front shroud **116**, strap or cable cover **112**, and rear mounting bracket **108** may be as described in commonly-owned U.S. Patent No. 10,886,646 or commonly-owned U.S. Patent No. 11,360,309, each of which is incorporated herein by reference in its entirety. An identification friend or for (IFF) module **124** is retained on the helmet **100** via the strap/cable cover **112**. Left and right shrouds **128** are attached to the respective left and right sides of the helmet **100** via a threaded fastener **134** engaging a clearance opening **136** in the shrouds **132** and extend between the rear battery mounting bracket **108** and the front shroud **116**. A battery pack center base module **132** is releasably attached to the rear battery mounting bracket **108**

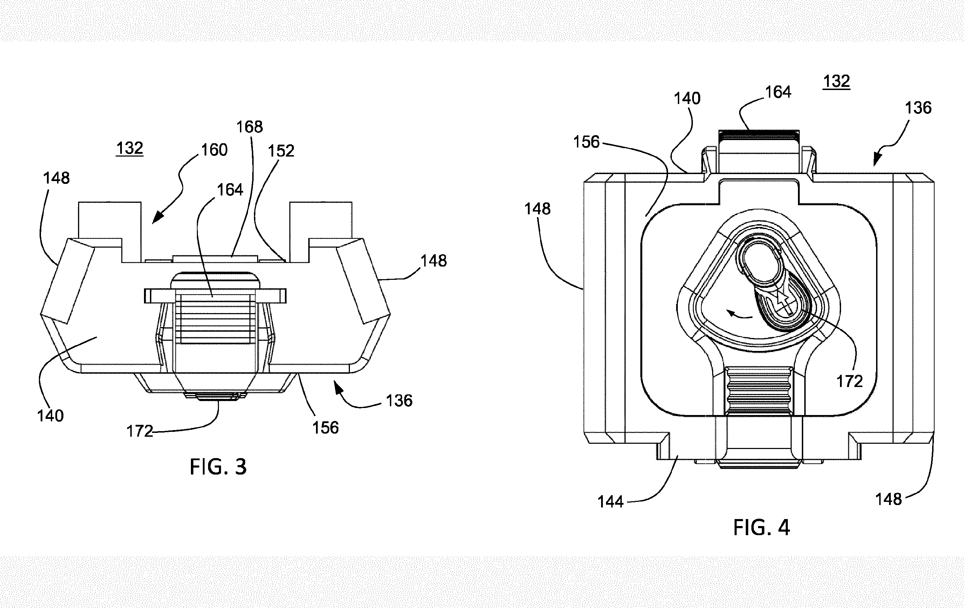

Referring now to FIGS. 3 and 4, and with continued reference to FIGS. 1 and 2, the battery pack center base module **132** includes a main body **136** having a top surface **140**, bottom surface **144**, left and right side surfaces **148**, a front or forward facing surface **152**, and a rear or rearward facing surface **156**. The front facing surface **152** includes a hot shoe receptacle **160** for detachably receiving the hot shoe mounting interface **120** on the rear battery mounting bracket **108**. As best seen in FIG. 5, in the illustrated embodiment, the hot shoe interface **120** includes a dovetail mounting member and the hot shoe receptacle **160** includes a complementary dovetail receptacle for sliding engagement. A latch release button **164** is disposed on the upper surface **140** for disengaging a latch member **168** to allow sliding removal of the battery pack center base module **132** from the rear battery mounting bracket **108**.

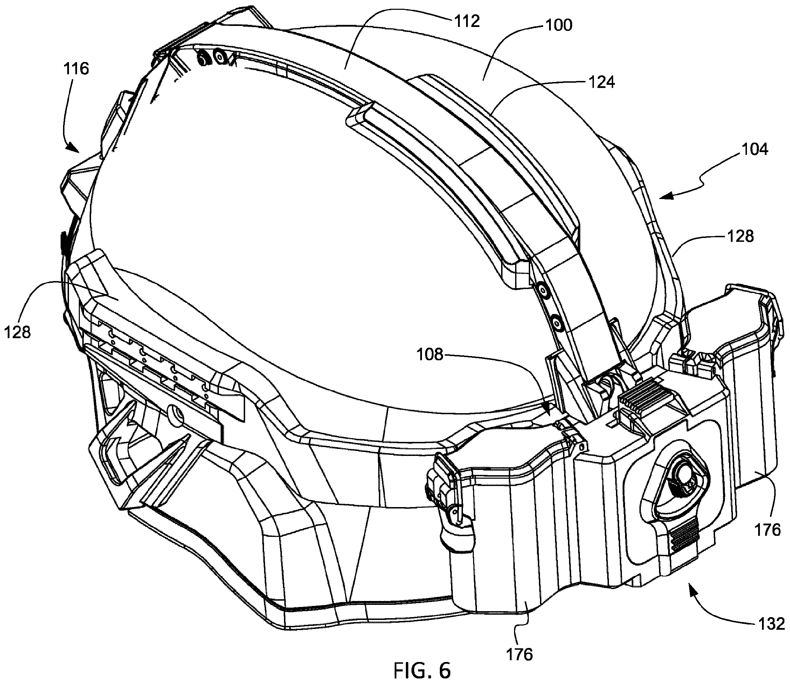

A battery selector switch **172** is pivotable between a left position and a right position. When the selector switch **172** is in the right position, the battery pack center base module **132** electrically couples a battery pack **176** (see FIG. 6) attached to the right side of the battery pack center base module **132** to the helmet mount assembly **104** via the rear battery mounting bracket **108**. When the selector switch **172** is moved the left position as indicated by the arrow appearing in FIG. 4, the battery pack center base module **132** electrically couples a battery pack **176** (see FIG. 6) attached to the right side of the battery pack center base module **132** to the helmet mount assembly **104** via the rear battery mounting bracket **108**. In operation, the user may use one of the battery packs **176** until it is depleted or nearly depleted and then use the selector switch **172** to switch the electrical connection to the other one of the battery packs **176**.

In embodiments, the selector **172** allows switching between the left and right battery packs without interruption to the power being supplied to the helmet mount assembly **104**. This is particularly advantageous when an accessory device attached to the helmet mount assembly **104** is a night vision device or other device which requires rebooting, which can sometimes take several minutes to complete, when the power is cycled. Each battery pack **176** is individually swappable such that when one battery pack **176** is depleted it can be changed without affecting operation of the devices being powered. In operation, when one of the battery packs **176** is depleted, the user then moves the selector switch to the battery pack **176** that is fully charged. The depleted battery pack **176** can then be pulled away from the center base module **132**, overcoming the force of attraction between the magnetic fastener elements on the center base module and the battery pack, thereby allowing the user to easily change the batteries in front of the body in plain view of the user; whereas, otherwise this task is difficult to do blindly reaching around the back.

Referring now to FIG. 5 and with continued reference to FIGS. 1-4, there is shown a helmet **100** with helmet mount assembly **104** with the rear battery mounting bracket **108** configured to receive the battery pack center base module **132**, wherein the helmet mounting system further includes a battery pack adapter **180** configured to interchangeably attach to the rear battery mounting bracket **108** in place of the battery pack center base module **132**. The adapter **180** includes a receptacle **182** receiving the hot shoe **120** and a hot shoe **186** configured to attach an existing or legacy battery pack (not shown). The dedicated battery pack center base module **132** is advantageous in that it does not require an adapter and connects directly to the helmet mount assembly **104** and thereby reduces the profile of the attached battery pack in relation to the surface of the helmet. However, the battery pack adapter **180** increases the functionality of the helmet mount assembly **104** in that allows for the use of other types of battery packs, such as preexisting or legacy battery packs, such as Elbit battery packs (e.g., ENVG-B battery box), Harris L3 battery packs, and the like.

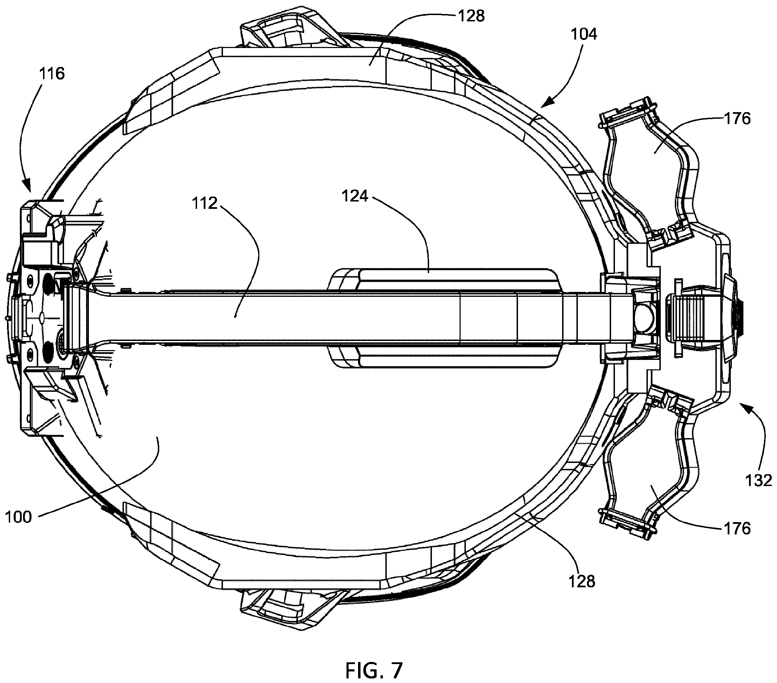

Referring now to FIGS. 6 and 7 and with continued reference to FIGS. 1-5, there is shown a helmet **100** with helmet mount assembly **104** with the rear battery mounting bracket **108** receiving the battery pack center base module **132**, as shown in FIGS. 1 and 2, respectively, wherein the battery pack center base module **132** has a battery pack **176** attached to each of the left and right side surfaces **148** thereof.

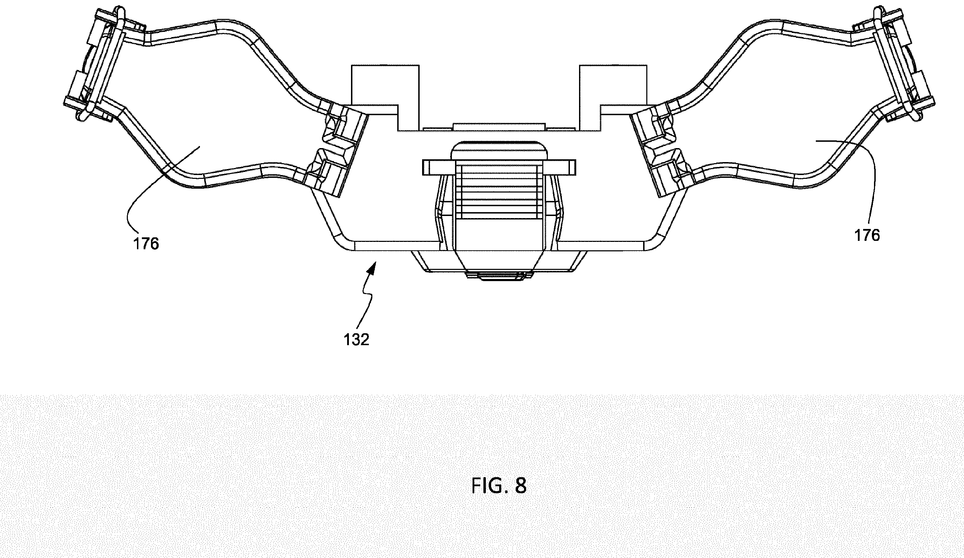

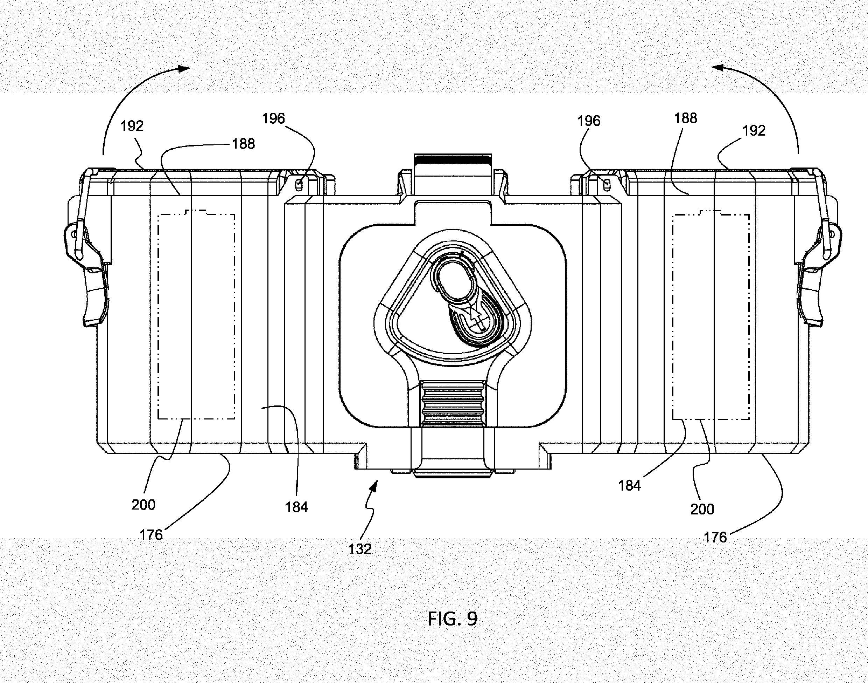

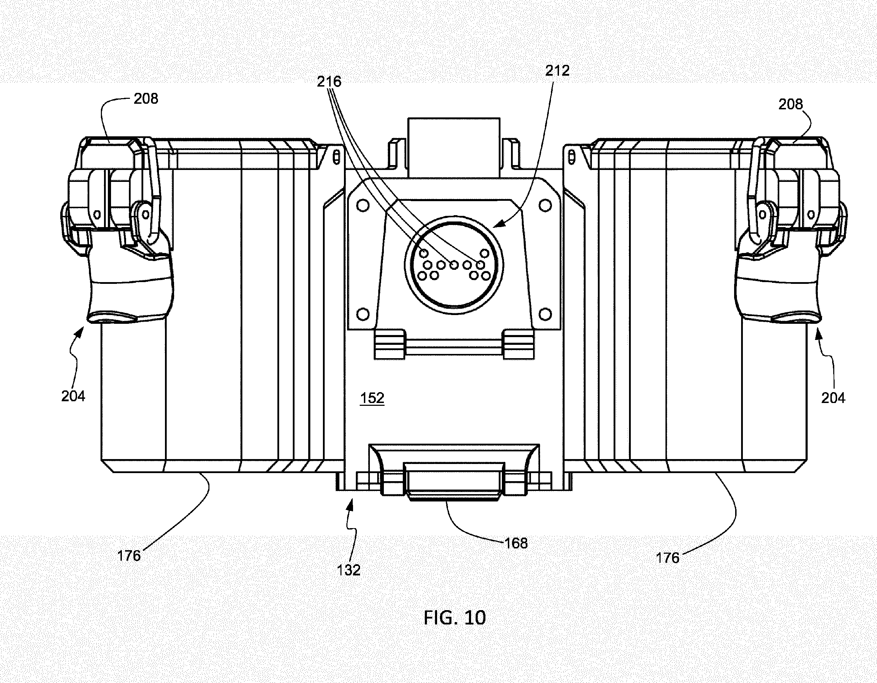

Referring now to FIGS. 8-10 and with continued reference to FIGS. 1-7, there is shown top, rear, and front views, respectively, of the battery pack center base module **132**, as shown in FIGS. 3 and 4, respectively, wherein the battery pack center base module **132** has a battery pack **176** attached to each of the left and right side surfaces **148** thereof.

In the illustrated exemplary embodiment, the battery pack **176** includes a housing **184** defining a battery compartment. The housing **184** has an open upper end **188** which is closed by a hinged cover **192**. The hinged cover **192** is pivotally attached to the housing **184** via a hinge **196** disposed at the proximal end of the cover **192** to allow opening and closing of the battery pack for insertion and removal of battery(ies) **200** into and from the housing **184**. In embodiments, housing **184** includes releasable coupling element **204**, secured to the housing **184** adjacent the distal end of the battery pack cover **192**, such as a latch (e.g., draw latch), clasp, buckle, or other releasable coupling as would be understood by persons skilled in the art. The coupling element **204** releasably engages a complementary attachment feature, such as a catch **208** disposed on the distal end of the cover **192**.

The forward facing surface **152** of the battery pack center base module **132** includes an electrical connector element **212** comprising a plurality of electrical contacts **216**. The connector element **212** is aligned with an opposing connector element **220** on the hot shoe interface **120** on the rear battery mounting bracket **108**, the connector element **220** comprising a plurality of electrical contacts **224** which are aligned with and face the electrical contacts **216** to provide communication of power, data, and control signals between the battery pack center base module **132** and the helmet mount assembly **104**.

The forward facing surface **152** of the battery pack center base module **132** further includes an electrical connector element **212** comprising a plurality of electrical contacts **216**. The connector element **212** is aligned with an opposing connector element **220** on the hot shoe interface **120** on the rear battery mounting bracket **108**, the connector element **220** comprising a plurality of electrical contacts **224** which are aligned with and face the electrical contacts **216**.

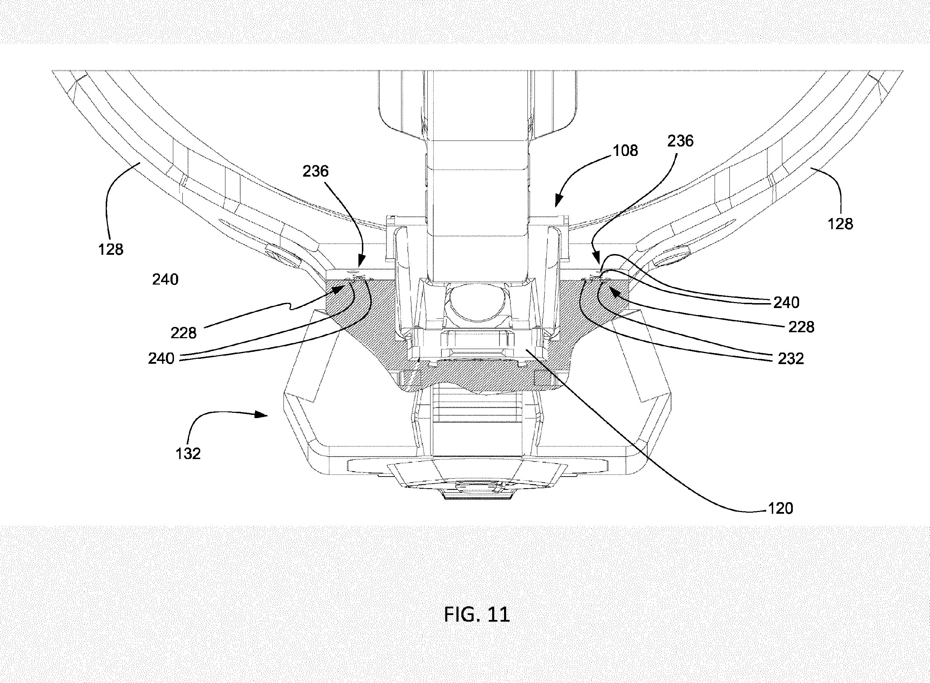

Referring now to FIG. 11, and with continued reference to FIGS 1-10, there is shown a top view illustrating the battery pack center base module **132** attached to the rear battery mounting bracket **108**, wherein a portion of the battery pack center base module **132** is cutaway to show the hot shoe **120** within the hot shoe receptacle **160**. The forward facing surface **152** of the battery pack center base module **132** further includes a left and right electrical connector elements **228** comprising a plurality of electrical contacts **232**. The connector elements **228** are aligned with opposing left and right connector elements **236** on the left and right helmet brackets **128**, respectively. The connector element **236** comprises a plurality of electrical contacts **224** which are aligned with and face the electrical contacts **232**.

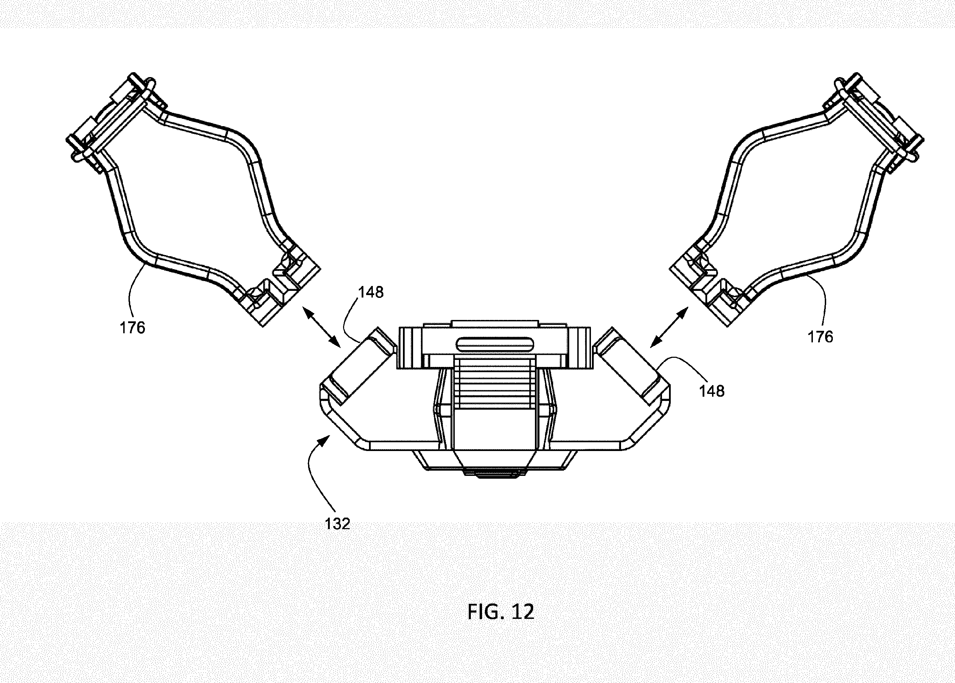

Referring now to FIG. 12, and with continued reference to FIGS. 1-11, there is shown the battery pack center base module **132** with the left and right battery packs **176** spaced apart from the respective left and right side surfaces **148**, illustrating the manner of attachment and removal of the battery packs **176** from the battery pack center base module **132**.

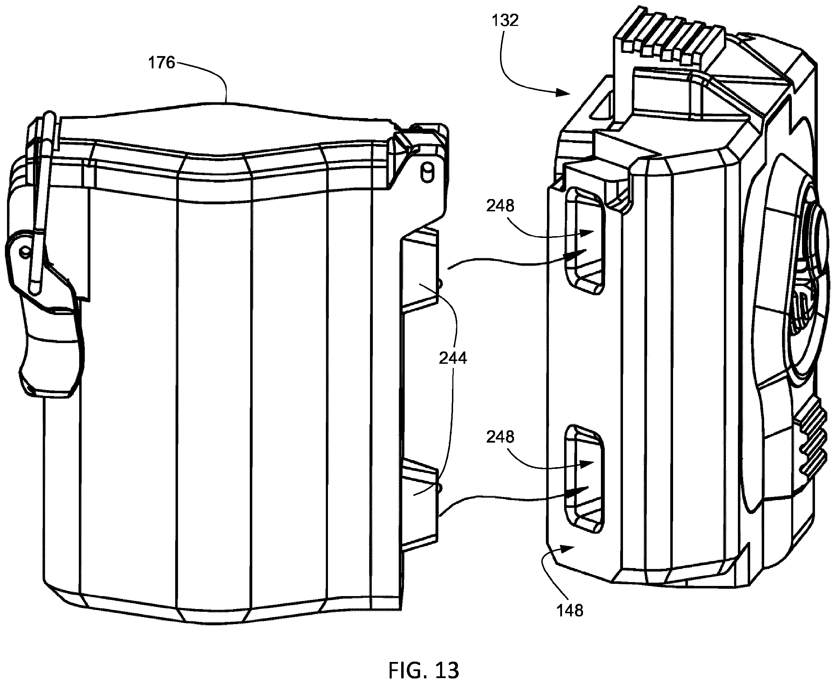

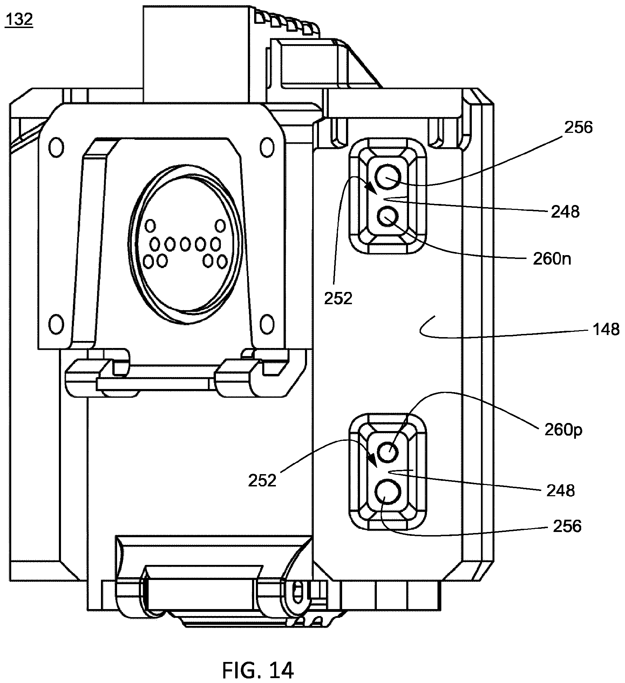

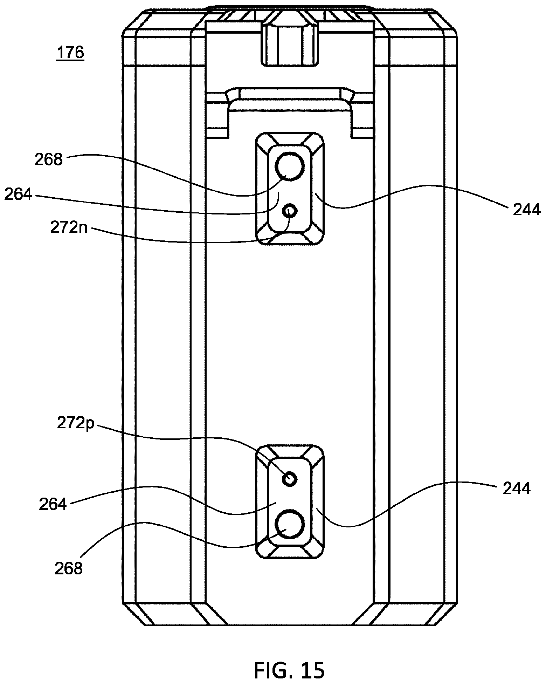

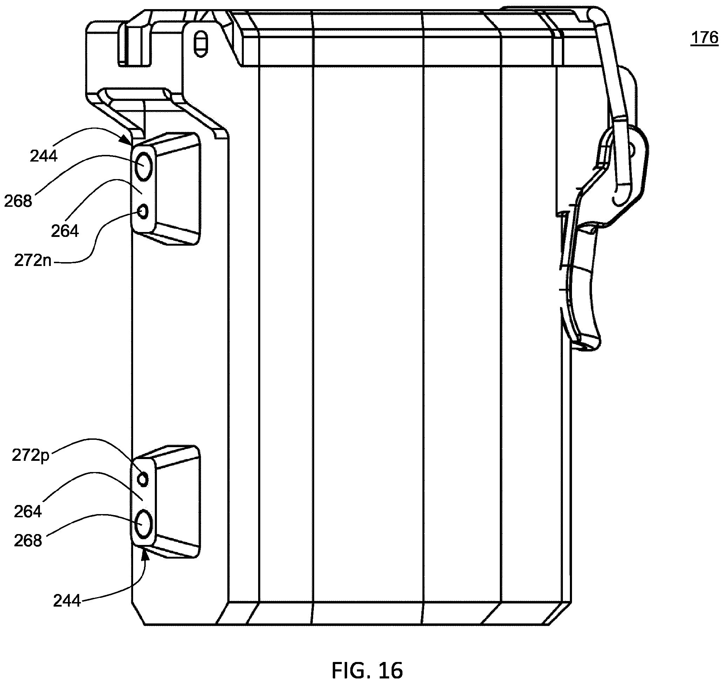

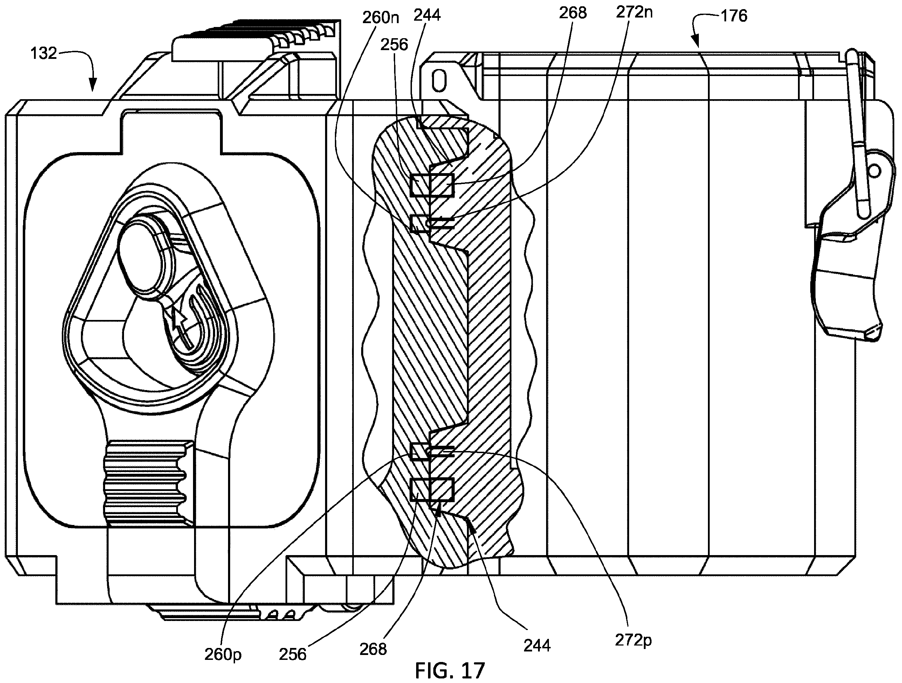

Referring now to FIGS. 13-17, and with continued reference to FIGS. 1-12, there is illustrated the manner of attachment of the battery packs **176** to the battery pack center base module **132**. The battery pack housing **184** includes a pair of frusto-pyramidical lugs **244** which releasably seat in correspondingly shaped receptacles or sockets **248** formed in the side surface **148** of the battery pack center base module **132**. It will be recognized that the lugs **244** may have other geometrical configurations, such as frusto-conical, truncated triangular pyramid, and so forth. A base surface **252** of each receptacle **252** includes a magnetic fastener element **256** and an electrical contact **260p**, **260n**. An upper surface **264** of each lug **244** includes a magnetic fastener element 268 is aligned with the magnetic fastener element **256** and an electrical contact **272p**, **272n** which is aligned with a respective one of the electrical contacts **260p**, **260n**. In embodiments, the electrical contact **272n** is electrically coupled to the negative terminal of the battery(ies) **200** in the battery pack **176** and the electrical contact **272p** is electrically coupled to the positive terminal of the battery(ies) **200** in the battery pack **176.**

In certain embodiments, the magnetic fastener elements **256** and **268** are each permanent magnets wherein the aligned faces are of opposite polarity to provide a physical connection between the battery pack center base module **132** and the battery pack **176** when the lugs **244** are inserted into the sockets **248**. In alternative embodiments, for each of the magnetic fastener element pairs **256**, **268**, one is a permanent magnet and the other is formed of a magnetically attractable material such as a ferromagnetic metal to provide a physical connection between the battery pack center base module **132** and the battery pack **176**. In operation, to remove the battery pack **176** from the battery pack center base module **132** to user exerts a pulling force on the battery pack **176** which is greater than the magnetic force of attraction between the fastener elements **256**, **268**.

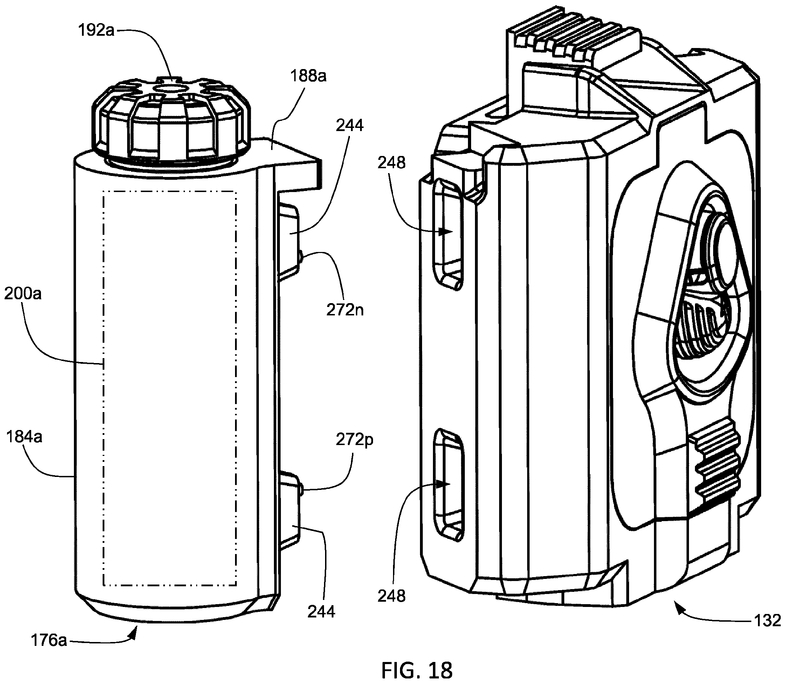

Referring now to FIG. 18, and with continued reference to FIGS. 1-17, there appears the battery pack center base module **132** and a first alternative embodiment battery pack **176a**. In the illustrated exemplary embodiment, the battery pack **176a** includes a housing **184a** defining a battery compartment configured to receive a single AAA battery **200a**. The housing **184a** has an open upper end **188a** which is closed by a removable threaded cap **192a.**

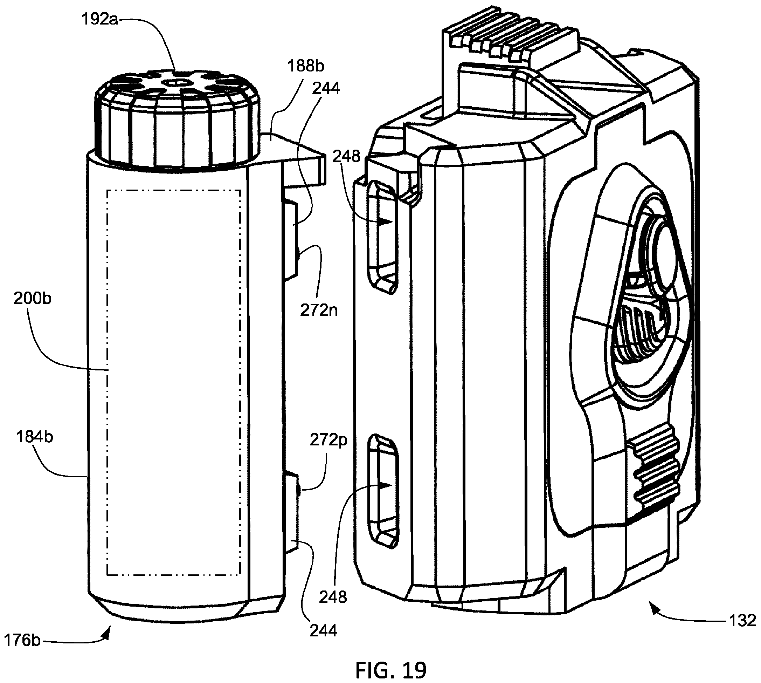

Referring now to FIG. 19, and with continued reference to FIGS. 1-18, there appears the battery pack center base module **132** and a second alternative embodiment battery pack **176b**. In the illustrated exemplary embodiment, the battery pack **176b** includes a housing **184b** defining a battery compartment configured to receive a single CR123A battery **200b**. The housing **184b** has an open upper end **188b** which is closed by a removable threaded cap **192a.**

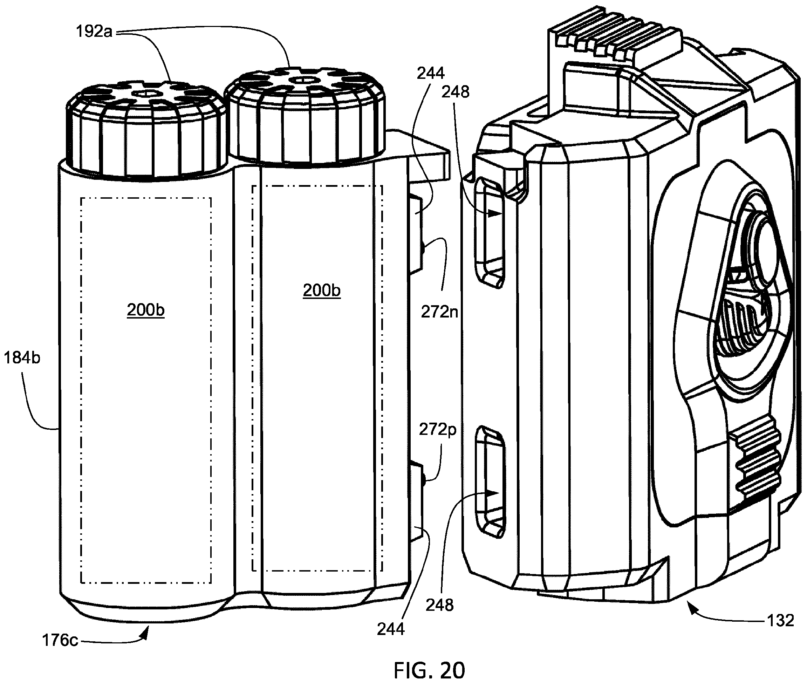

Referring now to FIG. 20, and with continued reference to FIGS. 1-19, there appears the battery pack center base module **132** and a third alternative embodiment battery pack **176c**. In the illustrated exemplary embodiment, the battery pack **176c** includes a housing **184c** defining two battery compartments each configured to receive a CR123A battery **200b**. The battery compartments have an open upper ends which are closed by removable threaded caps **192a.**

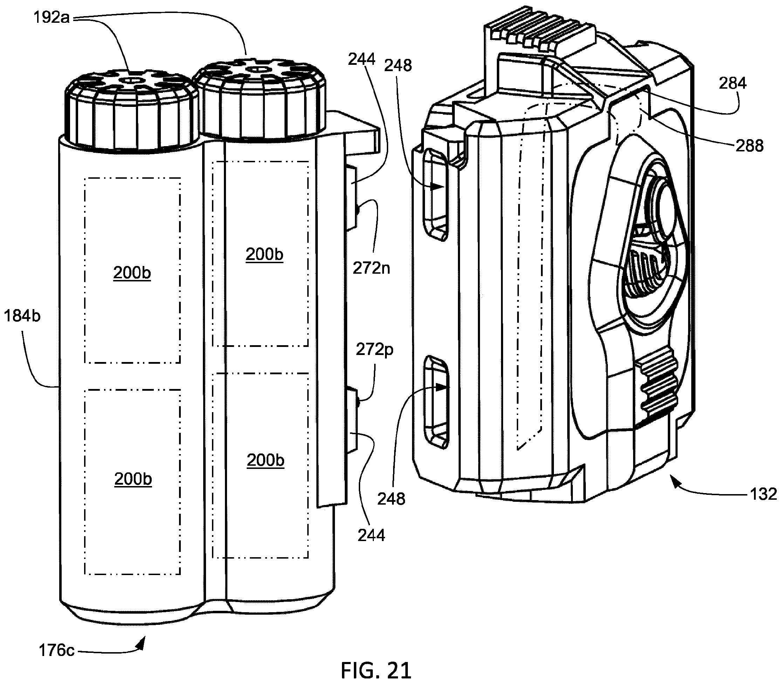

Referring now to FIG. 21, and with continued reference to FIGS. 1-20, there appears the battery pack center base module **132** and a fourth alternative embodiment battery pack **176d**. In the illustrated exemplary embodiment, the battery pack **176d** includes a housing **184d** defining two battery compartments each configured to receive two CR123A batteries **200b**. The battery compartments have an open upper ends which are closed by removable threaded caps **192a.**

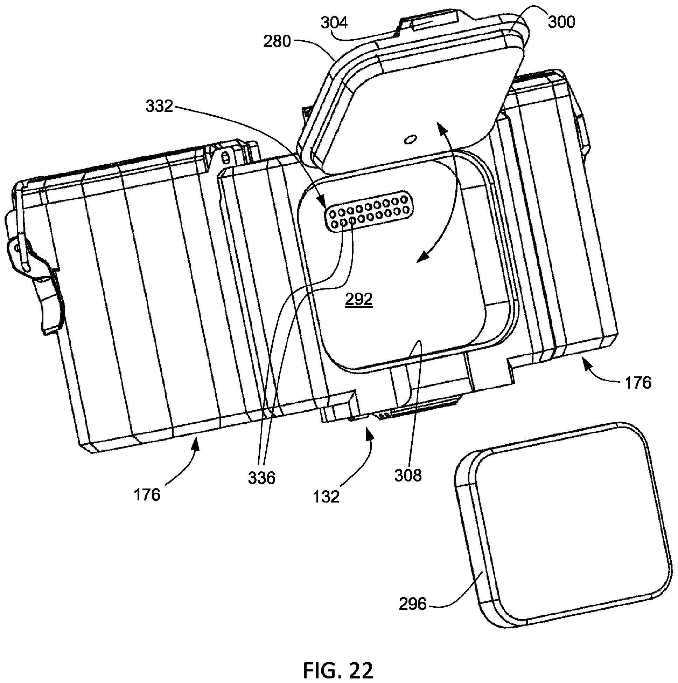

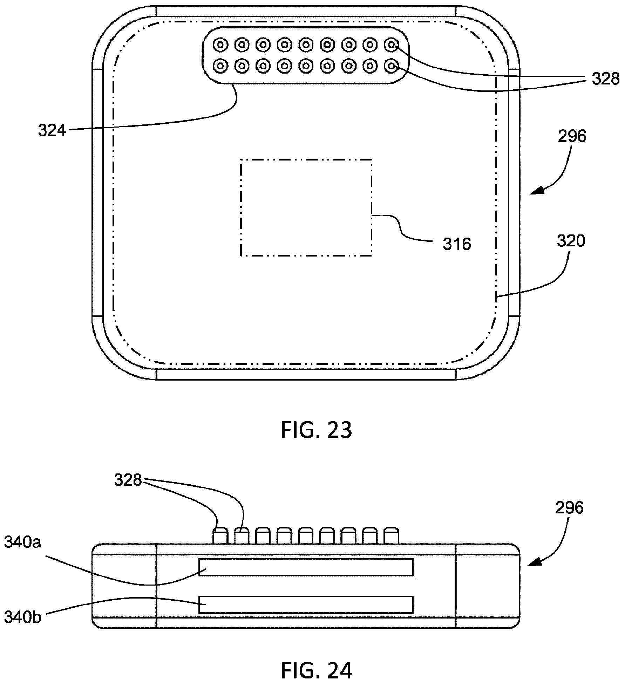

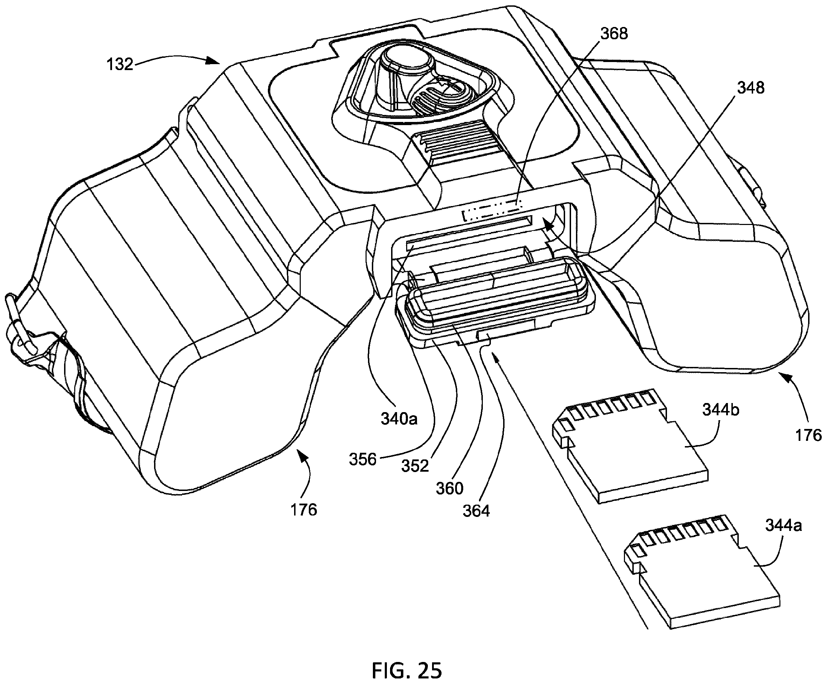

Referring now to FIGS. 22-25, and with continued reference to FIGS. 1-21, the battery pack center base module **132** includes a hatch door **280** on the rear surface **156** of the main body **136** which covers a cavity **292** configured to receive a modular processing board cartridge **296**. The door **280** is pivotable about a hinge **284**. The battery pack selector switch **172** is electrically coupled to the electrical components within the main body **136** via a flex circuit **288** which passes through the hinge **284** and which comprises circuit conductors or traces formed on a flexible substrate such as a flexible tape or film material, which may be formed, e.g., of a polymeric material. An elastomeric O-ring or gasket **300** is provided to seal against entry or moisture or other contamination into the cavity **292**. The door **280** is retained in the closed position via a latch member **304** releasably engaging a catch **308** on the main body **136** housing. The door **280** is opened by manually disengaging the latch member **304** from the catch using a latch release **312** disposed on the door **280**.

The modular processing board cartridge **296** includes a main board **316** including a processor **320**, such as microprocessor, central processing unit, microcontroller, or the like, including an associated memory and processing electronics. A connector interface **324** includes a plurality of electrical contacts **328** which engage aligned electrical contacts **336** on a mating connector **332** disposed in the cavity **292**. In embodiments, the contacts **328** are spring loaded pogo pins of the type comprising a barrel, plunger and encapsulated spring and the contacts **336** are complementary contact pads. The modular processing board cartridge **296** allows the processing capability of the battery pack center base module **132** to be swapped and updated. In certain embodiments, the cartridge dimensions and pin locations are controlled with an interface control document (ICD) to provide an open architecture allowing other manufacturers to make their own customized processing units tailored for specific electrical and processing requirements. In such embodiments, the center base module **132** is an "open architecture" platform allowing other manufactures to install their own unique electronic circuity in the cavity **292**.

The modular processing board cartridge **296** includes first and second card slots **340a** and **340b** for receiving first and second nonvolatile memory cards **344a** and **344b**, respectively, such as flash memory cards, Secure Digital (SD) cards, or the like. The modular processing board cartridge **296** is inserted and removed via the hatch door **280**. In certain embodiments, one of the card slots **340a, 340b** is used for expandable storage, to upload mission profiles, and/or for software/firmware upgrades, and the other one of the card slots **340a, 340b** is used for programming logic and the operating system.

The first and second nonvolatile memory cards **344a** and **344b** are inserted and removed from the first and second card slots **340a** and **340b** through an opening **348** in the bottom surface **144** of the battery pack center base module **132**. The opening **348** is covered by a bottom door **352** which is attached to the main body **136** via a hinge **356**. An elastomeric O-ring or gasket **360** provides a sealing interference between the door **352** and the main body **136** to prevent entry of moisture or other contamination into the cavity **292** or cartridge **296**. A releasable latch **364** on the bottom door **352** engages a catch **368** on the main body **136**.

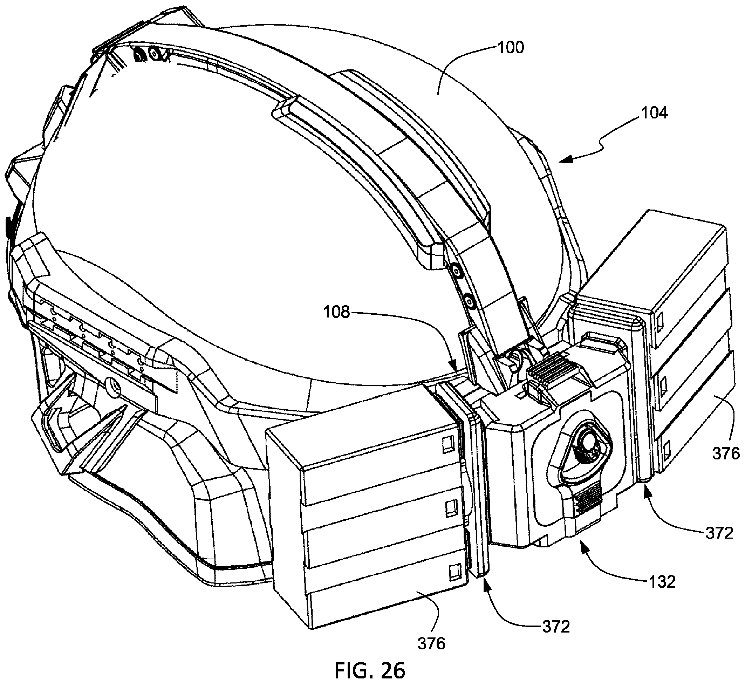

Referring now to FIG. 26 and with continued reference to FIGS. 1-25, there is shown a helmet **100** with helmet mount assembly **104** with the rear battery mounting bracket **108** receiving the battery pack center base module **132**, as shown in FIG. 1, wherein the battery pack center base module **132** has left and right Small Tactical Universal Battery (STUB) battery packs **376** attached to each of the left and right side surfaces **148** of the battery pack center base module **132** via STUB adapters **372**.

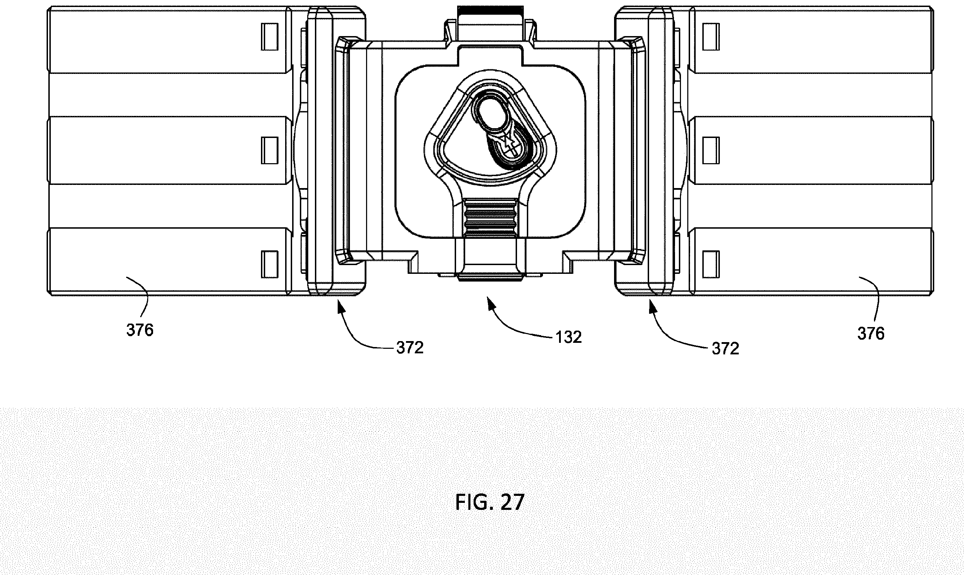

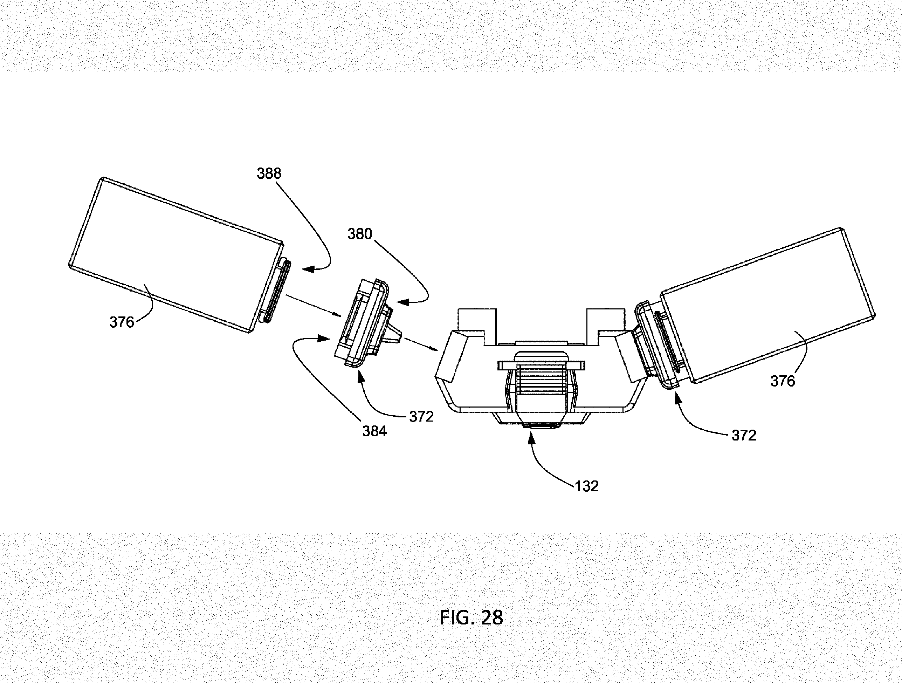

Referring now to FIGS. 27 and 28, and with continued reference to FIGS. 1-26, each STUB adapter **372** has a first interface surface **380** configured to detachably engage with the side surfaces **148** on the battery pack center base module **132** and a second interface surface **384** opposite the first interface surface **380** configured to detachably engage with a standard STUB battery pack interface **388**.

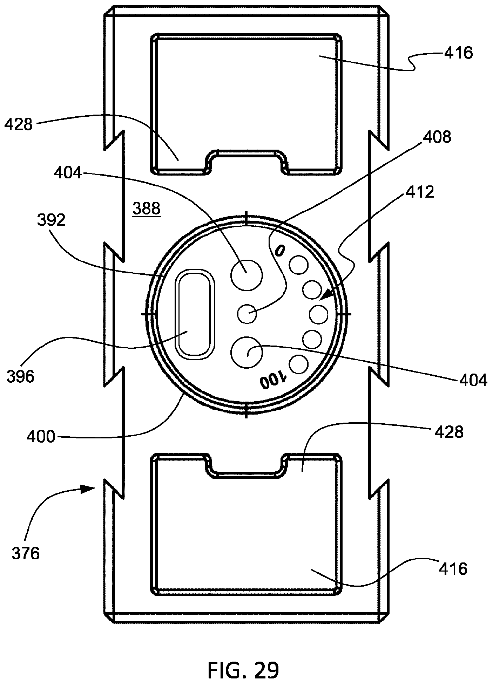

Referring now to FIG. 29, and with continued reference to FIGS 1-28, there is shown an exemplary STUB battery pack **376** which comprises an interface surface **388**. In the illustrated embodiment, the STUB interface surface **388** includes a center terminal **392**. The center terminal includes an elastomeric sealing ring **396** for sealing between the terminal **392** and the housing of the battery pack **376**. The terminal **392** includes a USB-C charging port **400**, power terminals **404 404,** a control signal terminal **408**, and state of charge indicia **412**. In certain embodiments, the STUB battery pack 376 may be generally as described in U.S. Patent Application Publication No. 2022/0216554 published on July 7, 2022, which is incorporated herein by reference in its entirety.

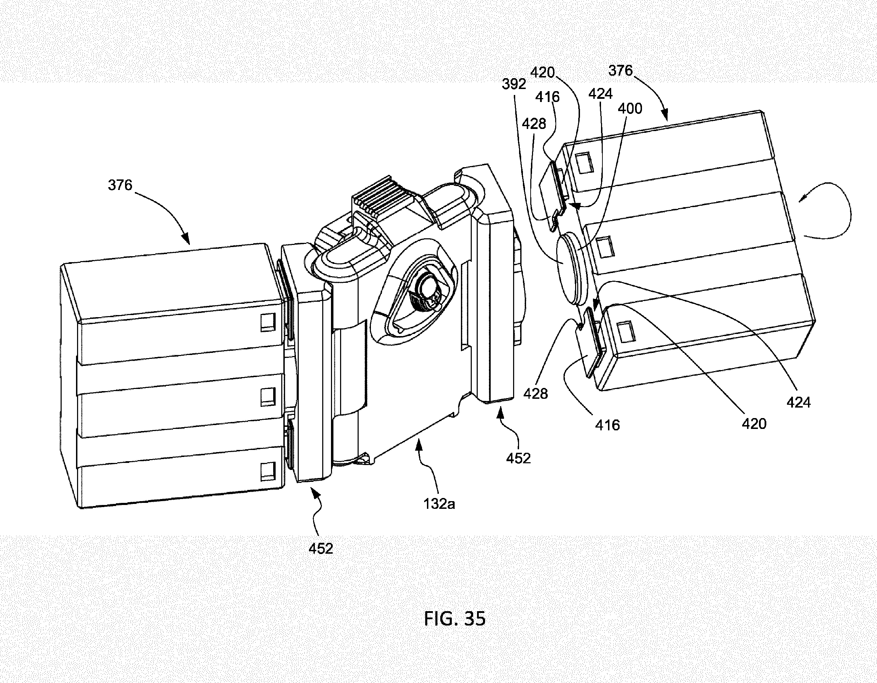

Tabs **416** are disposed at opposing ends of the interface surface **388** and are supported on respective posts or bosses **420** (see FIG. 35) to define a peripheral retention channel **424** between the tabs and the interface surface **388**. The tabs **416** include bayonet or twist type retention elements **428** for attachment of the battery pack **376** to the adapter surface **384** via twisting movement of the battery pack **376** relative to the stub adapter second interface surface **384**.

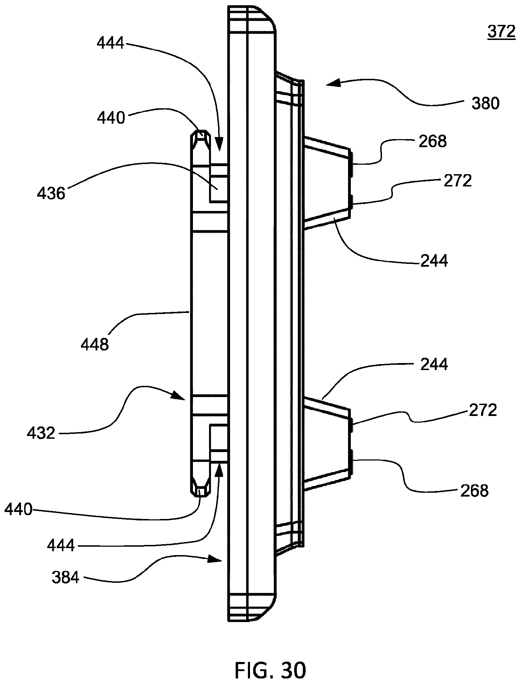

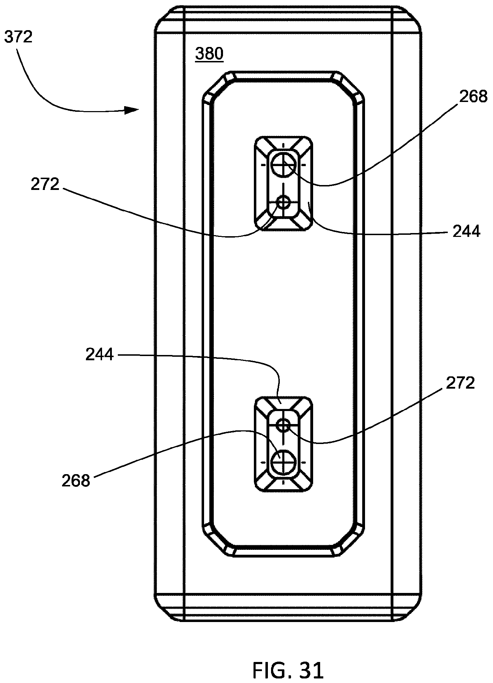

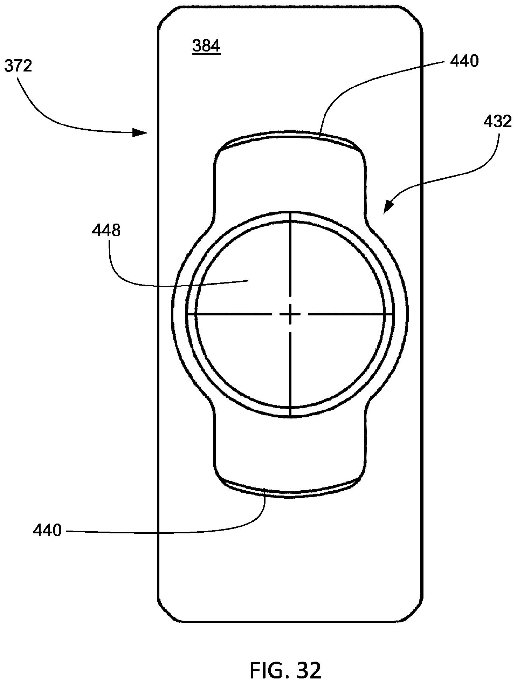

Referring now to FIGS. 30-32, and with continued reference to FIGS 1-29, the adapter first interface surface **380** includes a pair of connector lugs **244** as described above each having a magnet fastener element **268** and an electrical connector element **272**. The adapter **372** is physically attached and detached from the side surfaces **148** of the battery pack center base module **132** via the magnetic fastener elements as described above.

The second adapter interface surface **384** includes a bayonet type mount **432** including a center post **436** and opposing ears **440**. The ears **440** extend from the post **436** to define a retention groove **444** between each of the ears **440** and the surface **384**. A center terminal **448** on the bayonet mount assembly **432** is aligned with the center terminal **392**, which includes terminals that are electrically coupled to the terminals **272** on the first interface surface **380** to electrically couple the battery pack **376** to the battery pack center base module **132**.

In operation, to attach the battery pack **376** to the adapter second interface surface **384**, the battery pack **376** is positioned so that the center terminals **392** and **448** are aligned and the twist retention elements **428** on the STUB battery pack **376** are angularly offset with respect to the bayonet ears **440** on the adapter second interface **384**. The STUB battery pack **376** is then rotated to cause the twist retention elements **428** to engage the retention grooves **444**. To remove the battery pack **376** from the adapter second interface surface **384**, the process is reversed.

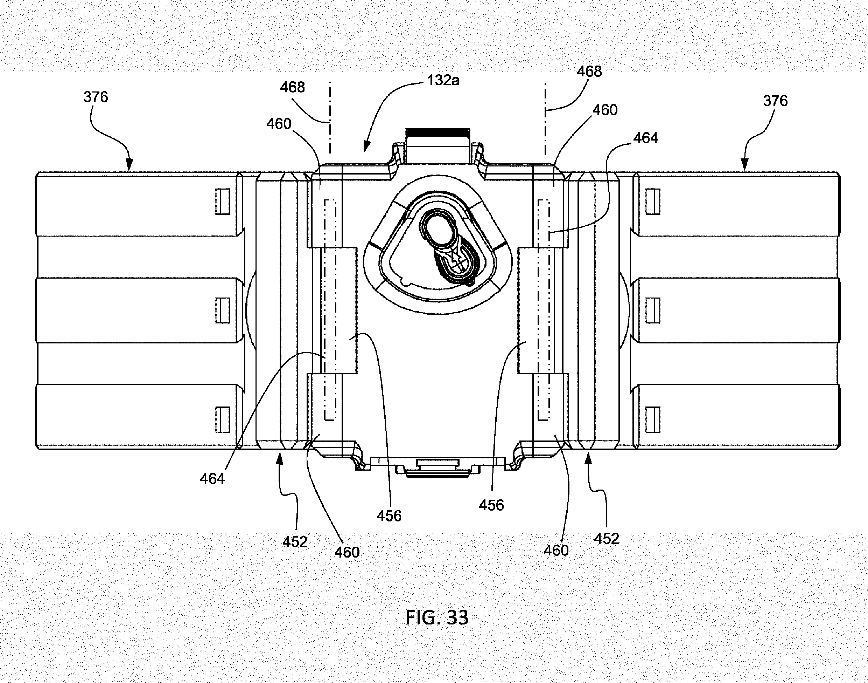

Referring now to FIGS. 33-35 and with continued reference to FIGS. 1-32, there is shown a second embodiment battery pack center base module **132a**, which is as described above by way of reference to the battery pack center base module **132**, except that the left and right side surfaces **148** have been replaced with hinged STUB attachment interface assemblies **452**.

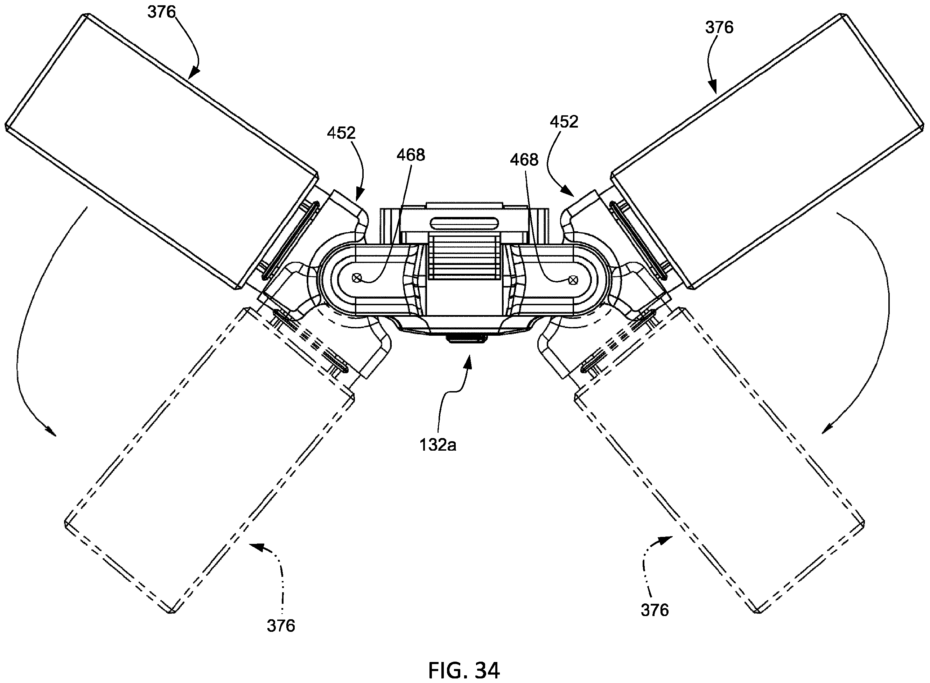

In certain embodiments, the hinge interface assemblies **452** each include a hinge knuckle **456** intermeshed between two hinge knuckles **460** on a main body **136a** of the battery pack center base module **132a** and rotatably attached with a hinge pin **464**, each defining a pivot axis **468**. As best seen in FIG. 34, the hinged connection allow the battery packs **376** to be pivoted about the axis **468** toward the helmet during normal use (as shown in solid lines in FIG. 34), and to be pivoted away from the helmet (as shown in broken lines in FIG. 34) when it is desired to remove or replace the battery pack **376**.

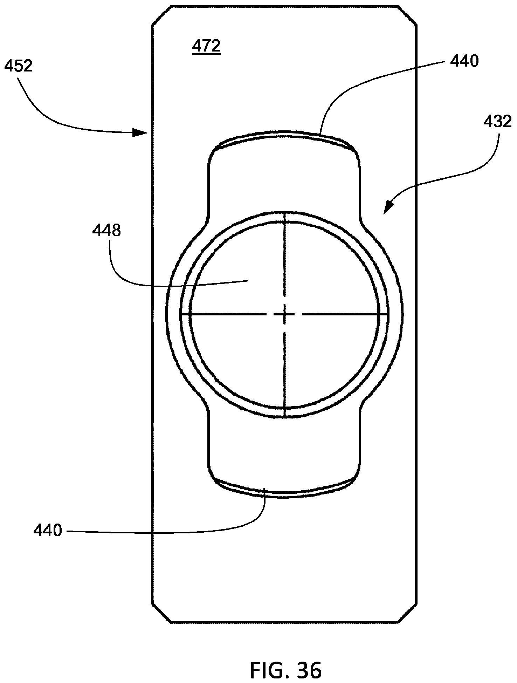

Referring now to FIG. 36, and with continued reference to FIGS. 1-35, there is shown an interface surface **472** of the hinge assembly **452** which is configured to detachably engage with the interface surface **388** (see FIG. 29) of the STUB battery pack **376**. The interface surface **472** includes a bayonet type mount **432** including a center post **436** (see FIG. 30) and opposing ears **440**. The ears **440** extend from the post **436** to define a retention groove **444** (see FIG. 30) between each of the ears **440** and the surface **472**. A center terminal **448** on the bayonet mount assembly **432** is aligned with the center terminal **392**, which includes terminals that engage the terminals **404** to electrically couple the battery pack **376** to the battery pack center base module **132a**.

In operation, to attach the battery pack **376** to STUB hinge interface **472**, the battery pack **376** is positioned so that the center terminals **392** and **448** are aligned and the twist retention elements **428** on the STUB battery pack **376** are angularly offset with respect to the bayonet ears **440** on the hinge interface **472**. The STUB battery pack **376** is then rotated to cause the twist retention elements **428** to engage the retention groove **444**. To remove the battery pack **376** from the hinge interface **472**, the hinged adapter **452** is pivoted so that the interface surface **472** faces away from the helmet and battery pack **376** is twisted until the twist retention elements **428** disengage from the retention grooves **444**.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims or the equivalents thereof.

## Claims

1. A battery pack system for a helmet mount assembly, comprising:
a center base module configured for electrical and physical attachment to a helmet mount assembly;
first and second battery packs for removable attachment to the center base module;
each of the first and second battery packs having a pair of protruding attachment lugs, each of the attachment lugs having first magnetic fastener element and a first electrical connector element;
the center base module having a first side surface configured for detachably securing the first battery pack;
the center base module having a second side surface opposite the first side surface configured for detachably securing the second battery pack;
each of the first and second side surfaces comprising a pair of lug receptacles for receiving a respective one of the pairs of protruding attachment lugs;
each lug receptacle having a second magnetic fastener element for physically coupling to a respective one of the first magnetic fastener elements; and
each lug receptacle having a second electrical connector element for electrically coupling to a respective one of the first electrical connector elements.

2. The battery pack system of claim 1, further comprising an adapter interchangeably attachable to the helmet mount assembly in place of the center base module and configured to releasably attach a third battery pack.

3. The battery pack system of claim 1, wherein the center base module comprises a modular processing system removably received within a main body of the center base module.

4. The battery pack system of claim 1, wherein the center base module comprises a switch configured to selectively couple a selected one of the first and second battery packs, wherein each of the first and second battery packs is replaceable independently of the other.

5. The battery pack system of claim 1, wherein the attachment lugs are frusto-pyramidical in shape.

6. The battery pack system of claim 1, further comprising:
first and second adapters;
the first adapter having a first interface surface configured for removable attachment to the first side surface of the center base module and a second interface surface configured for removable attachment to the first battery pack; and
the second adapter having a third interface surface configured for removable attachment to the second side surface of the center base module and a fourth interface surface configured for removable attachment to the second battery pack.

7. The battery pack system of claim 6, wherein the first and second battery packs are STUB battery packs.

8. A battery pack system for a helmet mount assembly, comprising:
a center base module configured for electrical and physical attachment to a helmet mount assembly;
first and second battery packs for removable attachment to the center base module;
a first adapter hingedly attached to a first side of the center base module and having a first interface surface configured for removable attachment to the first battery pack; and
a second adapter hingedly attached to a second side of the center base module and having a second interface surface configured for removable attachment to the second battery pack.

9. The battery pack system of claim 8, wherein the first and second adapters are pivotable between a deployed position wherein the first and second battery packs are pivoted toward the helmet and a non-deployed position wherein the first and second battery packs are pivoted away the helmet to facilitate attachment and removal of the first and second battery packs.

10. The battery pack system of claim 8, wherein the first and second battery packs are STUB battery packs.
